# EUROPEAN PATENT APPLICATION

(11) **EP 2 574 141 A2**
(43) Date of publication of application: **27.03.2013**
(21) Application number: 12275148.0
(22) Date of filing: 21.09.2012
(51) Int. Cl.: H05B 3/48

(54) **Electric heating device and electric heater comprising the same**

(30) Priority: 23.09.2011 CN 201110285238
(71) Applicant: LI, Chun Ho, Shatin, N.T., Hong Kong (CN)
(72) Inventor: Li, Ka Ki Kathy, Shatin, N.T., (CN); Li, On Wo, Shatin, N.T., (CN); Li, Chun Ho, Shatin, N.T., (CN)
(74) Representative: Powell, Timothy John

(57) **Abstract**

The invention provides an electric heating device comprising a second heat conduction element comprising opposing lateral surface A and lateral surface B, and the lateral surface A being in contact with water or aqueous solution to be heated; an electric heating assembly in abutment with the lateral surface B; a heat transfer stub or a heat transfer plate in firm connection with the second heat conduction element; and a temperature sensor plate for driving temperature control means and in abutment with the heat transfer stub or the heat transfer plate; wherein the second heat conduction element, the electric heating assembly, the heat transfer stub or the heat transfer plate, and the temperature sensor plate are in thermal contact from one another, characterized in that the electric heating assembly is in ω shape or in spiral shape. The electric heating assembly and/or the first heat conduction element can preferably be aggregated inside the cavity protruding on the central portion of the second heat conduction element to generate more heat energy, facilitating up and down circulatory movement of the water or aqueous solution at a fast speed so that the scale cannot deposit or attach onto the inner walls of the container, whereby to achieve the descaling effect fundamentally.

## Description

### Field of the Invention

This invention relates to an electric heating device and an electric heater comprising the electric heating device, and more particularly to an electric heating device for heating water or aqueous solutions without formation of scaling or with at least reduced formation of scaling, and an electric heater comprising the same.

### Background of the Invention

There are various types of electric heaters for heating water or aqueous solutions, such as an electric thermos, an electric kettle, a water heater, a coffee brewer, a distilling device, and the like. During the heating process, the existing electric heaters have generally the following deficiencies:
1. It is known that a relatively large amount of calcium (Ca) and magnesium (Mg) ions are present in the tap water, calcium carbonate (CaCO₃) and magnesium carbonate (MgCO₃) are formed as acicular crystals when the tap water is heated to 35°C, and the crystals are firmly attached onto inner walls of the heating container to create a large amount of incrustation scale which is hard to be removed. The scale has a very low thermal conductivity which is about 1/10 ∼ 1/100 of the thermal conductivity of a steel material, therefore the scale is a poor heat conductor. After the formation of a scale layer on the inner walls of the container of the electric heater, not only the thermal efficiency will be greatly reduced, but also the power consumption will be substantially increased, leading to a huge wastage of electric energy. It becomes worse that transfer of the heat energy generated from the heating elements to the water or aqueous solution is blocked by the thick scale layer formed on the container walls of the electric heater. As a result, the heat energy within the heating elements will be continuously increased. When a crack is formed in the scale layer, the water or aqueous solution inside the container permeates into the space defined by the scale layer and the inner walls of the container, and would be subject to the high temperature of the container walls to vaporize instantly. This may lead to an explosion of the electric heater and pose a serious threat to the life and property of the user.
2. The scale is relatively quite corrosive, and therefore the electric heater tends to deteriorate under the corrosive action of the scale over time.
3. A traditional C-shaped heating tube is used as the heating assemblies of the existing electric heaters. The contact surface between the heating tube and the heat conductor is relatively small, with the result of the difficulty in thermal dissipation and the accumulation of high thermal load. This may lead the heating tube to becoming ruptured or fused due to the high thermal load, even under the normal usage conditions, which is prone to occurring when the scaling is formed on the container of the electric heater.
4. The existing electric heaters are not able to effectively reduce or eliminate the formation of scaling, and the scaling will build up after the electric heater is used to heat water over time. Thus, there are serious potential risk and unsafety of using such electric heaters.

Therefore, there is a need for a safe and power-saving electric heater which is able to reduce or eliminate the formation of scaling.

### Summary of the Invention

One object of the invention is the provision of an improved electric heating device and an improved electric heater to at least partially overcome the defects of the existing electric heaters.

According to one aspect of this invention, there is provided an electric heating device which comprises:
a second heat conduction element comprising opposing lateral surface A and lateral surface B, and the lateral surface A being in contact with water or aqueous solution to be heated;
an electric heating assembly in abutment with the lateral surface B;
a heat transfer stub or a heat transfer plate in firm connection with the second heat conduction element; and
a temperature sensor plate for driving temperature control means and in abutment with the heat transfer stub or the heat transfer plate;
wherein the second heat conduction element, the electric heating assembly, the heat transfer stub or the heat transfer plate, and the temperature sensor plate are in thermal contact from one another;
**characterized in that** the electric heating assembly is in ω shape or in spiral shape.

According to another aspect of this invention, there is provided an electric heating device which comprises:
a second heat conduction element comprising opposing lateral surface A and lateral surface B, and the lateral surface A being in contact with water or aqueous solution to be heated;
a first heat conduction element in abutment with the lateral surface B;
an electric heating assembly in abutment with the first heat conduction element;
a heat transfer stub or a heat transfer plate in firm connection with the first heat conduction element and the second heat conduction element; and
a temperature sensor plate for driving temperature control means and in abutment with the heat transfer stub or the heat transfer plate;
wherein the first heat conduction element, the second heat conduction element, the electric heating assembly, the heat transfer stub or the heat transfer plate, and the temperature sensor plate are in thermal contact from one another;
**characterized in that** the electric heating assembly is in ω shape or in spiral shape.

According to a preferred embodiment of this invention, the first heat conduction element comprises opposing first surface and second surface. The first surface is in firm surface contact with the lateral surface B of the second heat conduction element, and the second surface is in fixed connection with the electric heating assembly. The temperature sensor plate is in firm surface contact with the heat transfer stub or the heat transfer plate.

According to the preferred embodiment of this invention, the second heat conduction element preferably comprises a dish-shaped body with an annular flanged edge, and a cavity formed by a central portion of the dish-shaped body protruding toward one side of the lateral surface A, in which cavity the electric heating assembly is arranged.

According to a further aspect of the invention, there is provided an electric heater which comprises a container casing with a water outlet and a handle, a container lid matching with an upper opening of the container casing, an electric heating means and a temperature control means mounted beneath the container casing, a switch for the temperature control means and a switch for the container lid, wherein the above-mentioned electric heating device is used as the electric heating means.

According to the invention, the ω shape or the spiral shape of the electric heating assembly of the electric heater enables the electric heating assembly to have relatively larger contact surface in contact with the second heat conduction element, which allows the efficient heat transfer to the second heat conduction element. In addition, the electric heating assembly and/or the first heat conduction element can preferably be aggregated inside the cavity protruding on the central portion of the second heat conduction element to generate more heat energy, facilitating up and down circulatory movement of the water or aqueous solution at a fast speed so that the scale cannot deposit or attach onto the inner walls of the container, whereby to achieve the descaling effect fundamentally.

### Brief Description of the Drawings

The invention will be described in more details by way of example with reference to the accompanying drawings, wherein:
Figure 1 is a top perspective view of an electric heating device according to a preferred embodiment of this invention;
Figure 2 is a cross-sectional view taken along the A-A line of Figure 1.
Figure 3 is a cross-sectional view taken along the B-B line of Figure 1.
Figure 4 is a bottom perspective view of an electric heating device according to another preferred embodiment of this invention.
Figure 5 is a cross-sectional view taken along the D-D line of Figure 4.
Figure 6 is a cross-sectional view taken along the E-E line of Figure 4.
Figure 7 is a cross-sectional view of an electric heater according to a preferred embodiment of this invention.
Figure 8 is a bottom perspective view of Figure 7.
Figure 9 is a cross-sectional view of a temperature control means according to a preferred embodiment of this invention.
Figure 10 is a schematic diagram of an electric heating device according to another preferred embodiment of this invention.

### Detailed Description of the Preferred Embodiments

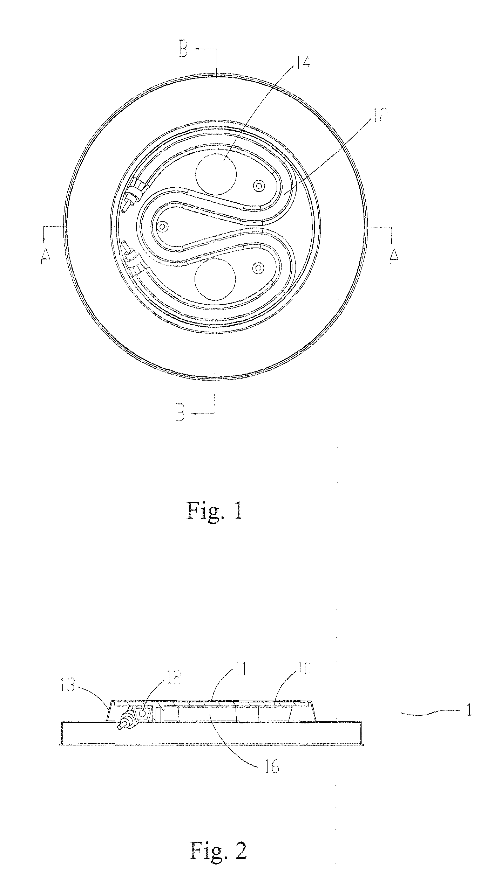

Referring to Figures 1, 2, 3 and 8, there is illustrated in perspective and cross-sectional views an electric heating device constructed according to a first embodiment of the invention. As illustrated in these figures, the electric heating device 1 comprises a first heat conduction element 10, a second heat conduction element 11, an electric heating assembly 12, a heat transfer stub 14 and a temperature control means 17.

The second heat conduction element 11 comprises opposing lateral surface A and lateral surface B, the lateral surface A is in contact with water or aqueous solution to be heated, and the lateral surface B is in abutment with the first heat conduction element 10 located underneath the lateral surface B. In this embodiment, the second heat conduction element 11 preferably comprises a dish-shaped body with an annular flanged edge, and a cavity 16 formed by a central portion of the dish-shaped body protruding toward one side of the lateral surface A.

The first heat conduction element 10 also comprises opposing first surface and second surface, the first surface is in firm surface contact with the lateral surface B of the second heat conduction element, and the second surface is in fixed connection with the electric heating assembly 12 to ensure the heat conduction therebetween.

The second heat conduction element 11 can be made of stainless steel or stainless iron, and the first heat conduction element 10 abutting on the second heat conduction element 11 can be made of aluminum or aluminum alloy which has relatively high thermal conductivity. The first heat conduction element 10 is shaped and sized to completely cover a part of the lateral surface B which is used as a top surface of the cavity 16.

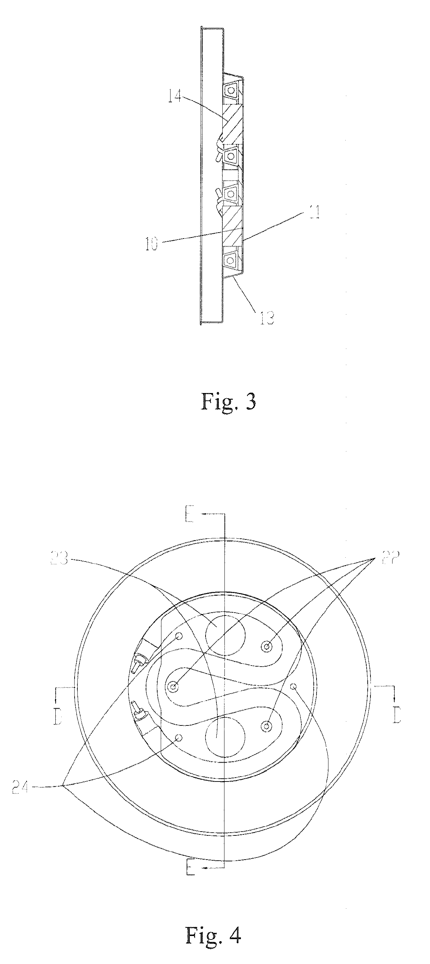

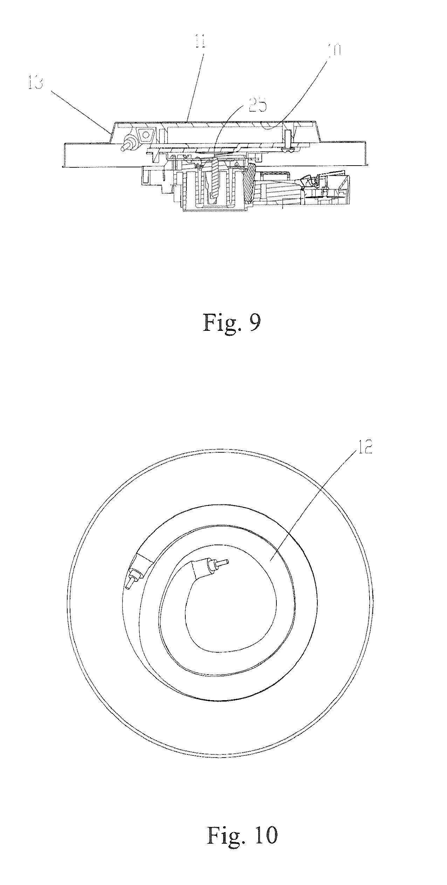

The electric heating assembly 12 can be a heating tube made of stainless steel, iron, aluminum, copper, etc., and may take the ω (see Figures 1 and 4) or spiral (see Figure 10) shape. As illustrated, the electric heating assembly 12 is wound in the cavity 16 along an edge and/or around a central portion of the first heat conduction element 10, with the heat transfer stub 14 arranged in a space defined by the electric heating assembly 12. The electric heating assembly and one end of the heat transfer stub come into surface contact with the first heat conduction element 10, and are in fixed connection with the second heat conduction element 11. The other end 26 of the heat transfer stub 14 comes in surface contact thermally with the temperature sensor plate (designated at 25 in Figure 9) of the temperature control means 17.

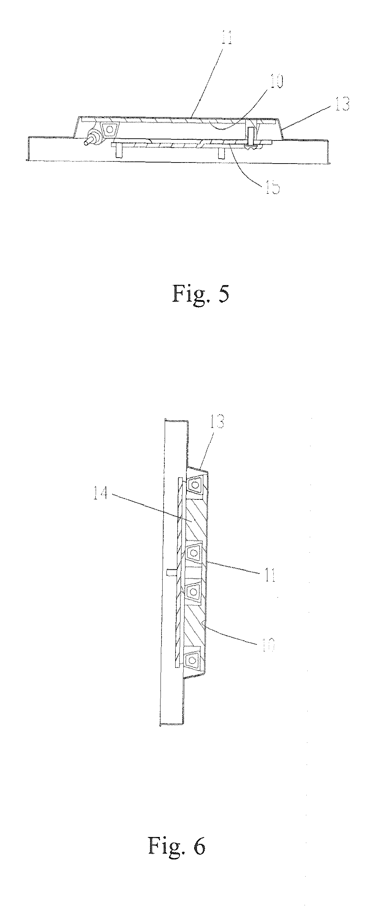

Referring to Figures 4, 5, 6 and 9, there is illustrated in perspective and cross-sectional views an electric heating device constructed according to a second embodiment of the invention. In this embodiment, the electric heating device is structurally same as the electric heating device discussed in the first embodiment, except that the heat transfer stub 14 as shown in Figures 1, 2 and 3 is replaced by a heat transfer plate 15 arranged under the electric heating assembly 12.

The heat transfer plate 15 and the electric heating assembly 12 are fixed together with the first heat conduction element 10 by screws 22. The temperature sensor plate 25 of the temperature control means 17 is connected, by screws 24, to the heat transfer plate 15 in a manner that the temperature sensor plate 25 is in surface contact with the heat transfer plate 15.

According to another preferred embodiment of the invention, the first heat conduction element 10 can be eliminated if the electric heating device is used in an electric water heater where the water is not necessary to get heated to boil. In other words, the electric heating assembly 12 can come into direct surface contact with the second heat conduction element 11. Moreover, the heat transfer plate or the heat transfer stub can be configured to connect directly with the second heat conduction element 11 and/or the electric heating assembly 12.

According to another preferred embodiment of the invention, the second heat conduction element 11 can be configured without the cavity 16, which would not have an adverse effect on the realization of the object of the invention. Alternatively, the central portion of the second heat conduction element can be recessed toward the lateral surface B to form the cavity 16, which produces the same effect of concentrating the heat generation from the electric heating assembly 12 within a relatively small area so that the heat transfer is more concentrated. This feature cannot be found in the heating mechanisms of all the electric heaters currently available in the market.

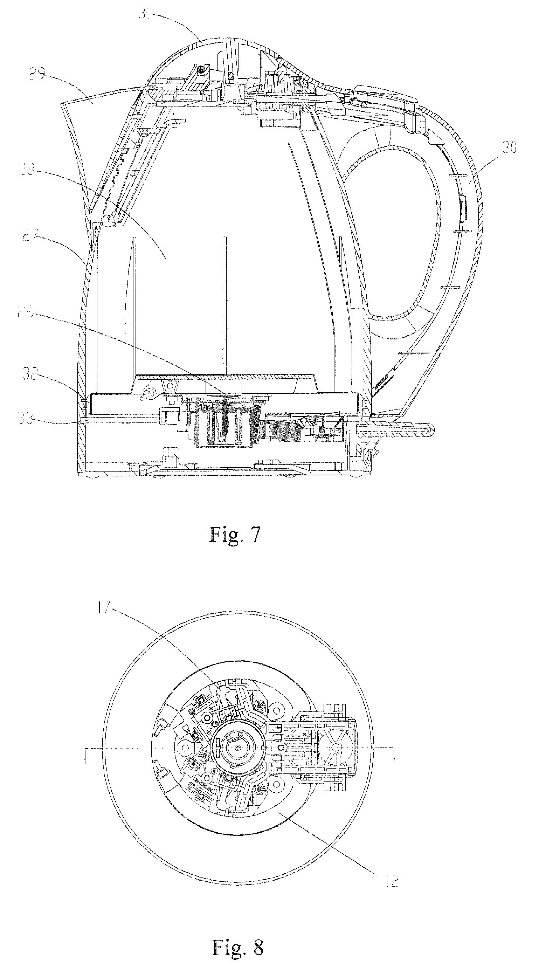

Figures 7 and 8 show an exemplary electric heater in which the electric heating device according to this invention is used. It should be understood that, in addition to the above electric heating device, the electric heater may include, but not limited to, the electric heating mechanisms currently available in the prior art.

According to the invention, the electric heater comprises a container casing 27 (which can be made of engineering plastic or metal) with a water outlet 29 and a handle 30, a container lid 31 matching with an upper opening of the container casing 27, a switch for the temperature control means 17, and a switch for the container lid 31, all of which are conventional in the art. The electric heater further comprises an electric heating device 1 discussed above and a temperature control means 17 which are arranged beneath the container casing 27.

As illustrated, the electric heating device 1 is in sealed connection with the container casing 27 by a sealing device 32 and a retainer ring 33 well known in the art. In the case that the container casing 27 is made of metal, its bottom can be firmly secured to the electric heating device 1 through the soldering, laser or flanging technologies.

For the sake of simplicity, the structures of the conventional parts and the temperature control means 17 known in the art as well as the structures of the electric heating device 1 are not described herein.

Figure 10 illustrates an electric heating device constructed according to another embodiment of the invention, which is structurally different in that its electric heating assembly 12 is in spiral shape instead of in ω shape.

Thus, the invention provides an electric heater whose electric heating assembly is in ω shape or in spiral shape, which allows the efficient heat transfer to the second heat conduction element. The electric heating assembly is preferably aggregated inside the cavity protruding on the central portion of the second heat conduction element to generate more heat energy, facilitating up and down circulatory movement of the water or aqueous solution at a fast speed so that the scale cannot deposit or attach onto the inner walls of the container, whereby to achieve the descaling effect fundamentally and prevent the container of the electric heater from getting corroded which is induced by the scale. Furthermore, the heat transfer stub or the heat transfer plate of the invention is designed to provide the convenience of devising and arranging the temperature control means to ensure the reliable functioning of the temperature control means. As such, the life of the electric heater of the invention can be extended considerably.

While the embodiments described herein are intended as exemplary electric heating device and electric heater, it will be appreciated by those skilled in the art that the present invention is not limited to the embodiments illustrated. Those skilled in the art will envision many other possible variations and modifications by means of the skilled person's common knowledge without departing from the scope of the invention; however, such variations and modifications should fall into the scope of this invention.

## Claims

1. An electric heating device comprising:
a second heat conduction element comprising opposing lateral surface A and lateral surface B, and the lateral surface A being in contact with water or aqueous solution to be heated;
an electric heating assembly in abutment with the lateral surface B;
a heat transfer stub or a heat transfer plate in firm connection with the second heat conduction element; and
a temperature sensor plate for driving temperature control means and in abutment with the heat transfer stub or the heat transfer plate;
wherein the second heat conduction element, the electric heating assembly, the heat transfer stub or the heat transfer plate, and the temperature sensor plate are in thermal contact from one another,
**characterized in that** the electric heating assembly is in ω shape or in spiral shape.

2. The electric heating device as claimed in claim 1, further comprising a first heat conduction element which is sandwiched between and in abutment with the lateral surface B and the electric heating assembly.

3. The electric heating device as claimed in claim 2, wherein the first heat conduction element comprises opposing first surface and second surface, the first surface being in firm surface contact with the lateral surface B of the second heat conduction element, and the second surface being in fixed connection with the electric heating assembly; and the temperature sensor plate is in firm surface contact with the heat transfer stub or the heat transfer plate.

4. The electric heating device as claimed in claim 2 or 3, wherein the second heat conduction element comprises a dish-shaped body with an annular flanged edge, and a cavity formed by a central portion of the dish-shaped body protruding toward one side of the lateral surface A, in which cavity the electric heating assembly, the heat transfer stub or the heat transfer plate, and the first heat conduction element all are housed.

5. The electric heating device as claimed in claim 2 or 3, wherein the heat transfer stub or the heat transfer plate is in fixed connection with the first heat conduction element and/or the second heat conduction element.

6. The electric heating device as claimed in claim 2 or 3, wherein the second heat conduction element is made of stainless steel or stainless iron, and the first heat conduction element is made of aluminum or aluminum alloy.

7. The electric heating device as claimed in claim 1, wherein the electric heating assembly is a heating tube made of stainless steel, iron, aluminum or copper.

8. An electric heater comprising a container casing with a water outlet and a handle, a container lid matching with an upper opening of the container casing, a temperature control means mounted beneath the container casing, a switch for the temperature control means, a switch for the container lid, and the electric heating device as claimed in any of the claims 1 to 3 and arranged beneath the container casing.
